# EUROPÄISCHE PATENTSCHRIFT

(11) **EP 3 935 435 B1**
(45) Veröffentlichungstag und Bekanntmachung des Hinweises auf die Patenterteilung: **17.04.2024**
(21) Anmeldenummer: 20707407.1
(22) Anmeldetag: 26.02.2020
(51) Int. Cl.: G02B 27/01

(54) **OPTISCHES SYSTEM ZUM ERZEUGEN EINES VIRTUELLEN BILDES UND DATENBRILLE**
OPTICAL SYSTEM FOR GENERATING A VIRTUAL IMAGE, AND SMARTGLASSES
SYSTÈME OPTIQUE POUR GÉNÉRER UNE IMAGE VIRTUELLE ET LUNETTES INTELLIGENTES

(30) Priorität: 08.03.2019 DE 102019106020
(43) Veröffentlichungstag der Anmeldung: 12.01.2022
(73) Patentinhaber: tooz technologies GmbH, 73430 Aalen (DE)
(72) Erfinder: DOBSCHAL, Hans-Juergen, 99510 Kleinromstedt (DE); HILLENBRAND, Matthias, 07745 Jena (DE)
(74) Vertreter: Witte, Weller & Partner Patentanwälte mbB
(86) Internationale Anmeldenummer: PCT/EP2020/055052
(87) Internationale Veröffentlichungsnummer: WO 2020/182472

(56) Entgegenhaltungen:
- DE-A1-102014 118 490
- US-A1- 2010 149 073
- US-A1- 2018 095 283
- US-B1- 8 189 263

## Beschreibung

Die Erfindung betrifft ein optisches System zum Erzeugen eines virtuellen Bildes von einem von einer Bildgeberanordnung bereitgestellten Quellbild gemäß dem Oberbegriff des Anspruchs 1.

Die Erfindung betrifft ferner eine Datenbrille mit einem solchen optischen System.

Ein optisches System und eine Datenbrille der eingangs genannten Art ist aus dem Dokument US 2018/0095283 A1 bekannt.

Ein optisches System der eingangs genannten Art kann in einem sog. Head Mounted Display (HMD), d.h. einer kopfgetragenen Anzeigevorrichtung, verwendet werden. Eine gängige Form von HMDs verwendet Bildschirme, die vor den Augen getragen werden und dem Benutzer Computer-generierte Bilder oder von Kameras aufgenommene Bilder präsentieren. Derartige HMDs sind häufig voluminös und erlauben keine unmittelbare Wahrnehmung der Umgebung. Erst in jüngerer Zeit sind HMDs entwickelt worden, die in der Lage sind, dem Benutzer ein mit einer Kamera aufgenommenes Bild oder ein Computer-generiertes Bild darzubieten, ohne die unmittelbare Wahrnehmung der Umgebung zu verhindern, indem der Benutzer durch das HMD hindurchblicken kann. Derartige HMDs, die auch Datenbrillen genannt werden, ermöglichen die Nutzung dieser Technologie im alltäglichen Leben.

Optische Systeme solcher Datenbrillen weisen typischerweise eine Bildgeberanordnung, einen Lichtleiter und eine Auskoppelanordnung auf. Die Auskopplung des im Lichtleiter typischerweise durch Totalreflexion an den Außenflächen des Lichtleiters propagierenden Lichtes aus dem Lichtleiter zum Auge des Benutzers kann durch unterschiedliche Ansätze realisiert werden, beispielsweise reflektiv, refraktiv, diffraktiv, holographisch usw., oder durch eine Kombination davon. Datenbrillen zeichnen sich durch hohe Anforderungen an die Abbildungsqualität bei einem relativ großen Gesichtsfeld aus. Gleichzeitig stehen bei solchen kopfgetragenen Systemen ein geringes Gewicht und Kompaktheit (kleiner Bauraum) im Vordergrund, was eine Abbildung des Quellbildes durch möglichst wenig optische Flächen verlangt, um das virtuelle Bild zu erzeugen, womit jedoch wiederum wenig Flächen für die Kompensation von optischen Aberrationen zur Verfügung stehen. Eine weitere Anforderung an eine Datenbrille ist die Akzeptanz bei Benutzern, die nicht zuletzt durch das äußere Erscheinungsbild der Datenbrille beeinflusst wird. Insbesondere sind geringe Dicken des Lichtleiters erwünscht, damit das Aussehen der Datenbrille sich von einer gewöhnlichen Brille nicht wesentlich unterscheidet.

Bei einem aus dem Dokument WO 2016/102190 A1 bekannten optischen System erfolgt die Auskopplung des im Lichtleiter propagierenden Lichtes über eine Reflexion an einer zusammenhängenden Freiform-Fresnel-Fläche mit einer Mehrzahl von spiegelnden Fresnel-Segmenten. Wie in dem Dokument beschrieben ist, hängt die optische Abbildungsqualität des optischen Systems aufgrund der Lage der Auskoppelanordnung nahe zur Austrittspupille des optischen Systems und nahe zur Eintrittspupille des Auges sehr stark von der Oberflächentreue und -qualität der Freiform-Fresnel-Fläche ab. Ein Nachteil einer solchen Freiform-Fresnel-Fläche besteht dennoch in der eingeschränkten optischen Abbildungsfunktion der Fresnel-Flächen der Fresnel-Segmente sowie in einem reduzierten Gesichtsfeldbereich bzw. einer reduzierten Eyebox-Größe. Die Eyebox ist derjenige dreidimensionale Bereich der Lichtröhre im Abbildungsstrahlengang, in dem sich die Augenpupille bewegen kann, ohne dass eine Vignettierung des Bildes erfolgt. Da der Abstand des Auges zur Datenbrille im Wesentlichen konstant ist, kann die Eyebox auf eine zweidimensionale Eyebox, die lediglich die Drehbewegungen des Auges berücksichtigt, reduziert werden. In diesem Fall entspricht die Eyebox im Wesentlichen der Austrittspupille der Datenbrille am Ort der Eintrittspupille des Auges. Letztere ist in der Regel durch die Augenpupille gegeben.

Die nicht optimalen Abbildungseigenschaften der Freiform-Fresnel-Segmente der Spiegelfläche sind durch den gegenseitigen unstetigen Versatz der einzelnen Fresnel-Flächen in Blickrichtung des Auges bedingt. Dieser gegenseitige unstetige Versatz der einzelnen Fresnel-Segmente in Blickrichtung erlaubt es nicht, die einzelnen Fresnel-Segmente so zu gestalten, dass sich mit zwei benachbarten Fresnel-Segmenten, die zur Abbildung eines gleichen Feldpunktes des Quellbildes beitragen, eine hinreichend gute Abbildung erreichen lässt. Man ist dadurch gezwungen, die einzelnen Fresnel-Flächen nur als Planspiegel auszuführen, oder allenfalls mit geringen Abweichungen von Planspiegeln. Ein weiterer Nachteil der Fresnel-Segmente besteht darin, dass Schattenbereiche zwischen unmittelbar benachbarten Fresnel-Segmenten, die nicht zur Auskopplung von Nutzlicht vorgesehen sind, Anlass zu Mehrfachreflexionen geben, die Geisterbilder erzeugen können.

Das aus dem eingangs genannten Dokument US 2018/0095283 A1 bekannte optische System weist eine Auskoppelanordnung mit diffraktiv reflektiven Elementen auf.

US 8 189 263 B1 offenbart einen Bildwellenleiter mit einem Einkoppelbereich zum Empfangen von Eingangslicht in den Bildwellenleiter und einem Auskoppelbereich zum Emittieren von Ausgangslicht aus dem Bildwellenleiter. Der Einkoppelbereich weist ein eindimensionales Array von Einkoppelspiegelstrukturen auf, die so orientiert sind, dass sie das Eingangslicht innerhalb des Wellenleiters zu dem Auskoppelbereich reflektieren. Der Auskoppelbereich umfasst ein zweidimensionales Array von Auskoppelspiegelstrukturen, die so orientiert sind, dass sie das in dem Wellenleiter geführte Licht aus dem Wellenleiter auskoppeln.

US 2010/0149073 A1 offenbart ein am Auge zu tragendes Displaysystem. Das System umfasst eine Quelle modulierten Lichtes, eine proximale Optik, die nahe einem Auge des Benutzers positionierbar ist, um das modulierte Licht zu empfangen. Die proximale Optik weist eine Mehrzahl von Gruppen optisch umlenkender Bereiche auf. Die optisch umlenkenden Bereiche sind dazu ausgebildet, eine Mehrzahl von Strahlen des modulierten Lichtes in eine Pupille des Auges zu richten, um einen zusammenhängenden beleuchteten Bereich der Retina des Auges zu bilden. Eine erste Gruppe der optisch umlenkenden Bereiche ist dazu ausgebildet, das modulierte Licht von der Quelle zu empfangen und Strahlen des modulierten Lichtes in die Pupille des Auges zum Beleuchten eines ersten Abschnittes der Retina umzulenken. Eine zweite Gruppe der optisch umlenkenden Bereiche ist dazu ausgebildet, moduliertes Licht von der Quelle zu empfangen und Strahlen des modulierten Lichtes in die Pupille des Auges zum Beleuchten eines zweiten Abschnittes der Retina umzulenken.

DE 10 2014 118 490 A1 offenbart Anzeigevorrichtungen für Datenbrillen, bei denen eine optische Anordnung, die in einem Blickbereich eines Auges angeordnet ist, mittels einer Laserscanneranordnung abgerastert wird.

Es ist eine Aufgabe der vorliegenden Erfindung, ein optisches System der eingangs genannten Art dahingehend weiterzubilden, dass das virtuelle Bild aus dem Quellbild mit höherer Abbildungsqualität erzeugt werden kann, wobei ein möglichst großes Gesichtsfeld unter Beibehaltung einer geringen Baugröße des Systems erreicht wird.

Erfindungsgemäß wird die Aufgabe dadurch gelöst, dass die Auskoppelanordnung eine Mehrzahl von Einzelspiegeln aufweist, die in Lichtausbreitungsrichtung jeweils voneinander beabstandet angeordnet sind, wobei eine erste Gruppe von Einzelspiegeln erste Lichtstrahlenbündel, die von dem ersten Bildgeberbereich ausgehen, aus dem Lichtleiter zum Auge hin auskoppelt, und zumindest eine zweite Gruppe von Einzelspiegeln zweite Lichtstrahlenbündel, die von dem zumindest einen zweiten Bildgeberbereich ausgehen, aus dem Lichtleiter zum Auge hin auskoppelt, und dass die Einzelspiegel der ersten Gruppe und die Einzelspiegel der zumindest einen zweiten Gruppe in Lichtausbreitungsrichtung abwechselnd angeordnet sind.

Die Auskoppelanordnung des erfindungsgemäßen optischen Systems weist somit eine Mehrzahl an Einzelspiegeln auf, die in Richtung der Lichtausbreitung in dem Lichtleiter, die von der Bildgeberanordnung zur Auskoppelanordnung weist, jeweils voneinander beabstandet angeordnet sind. Die Lichtausbreitungsrichtung kann die horizontale Richtung sein, wenn das optische System bestimmungsgemäß am Kopf getragen wird. Die Einzelspiegel sind vorzugsweise als separate Spiegel ausgeführt, insbesondere als Minispiegel. Im Unterschied zu einer Freiform-Fresnel-Spiegelfläche, die aus miteinander zusammenhängenden und aneinander anschließenden Fresnel-Segmenten besteht, hat die Ausgestaltung der Auskoppelanordnung mit voneinander beabstandeten Einzelspiegeln den Vorteil, dass die Einzelspiegel mit einer optisch abbildenden Wirkung ausgebildet werden können, die für eine hohe Abbildungsqualität erforderlich ist. Es kann sogar die gesamte Abbildungsfunktion des optischen Systems durch die Einzelspiegel bereitgestellt werden. Hierdurch kann auf eine zusätzliche Abbildungsoptik, beispielsweise im Bereich der Bildgeberanordnung, verzichtet werden.

Des Weiteren ist das erfindungsgemäße optische System in zwei oder mehr Teilsysteme unterteilt. Das Quellbild wird von zwei oder, entsprechend der Anzahl an Teilsystemen, mehr Bildgeberbereichen der Bildgeberanordnung bereitgestellt. Unter zwei oder mehr Bildgeberbereichen wird im Sinne der Erfindung verstanden, dass das Quellbild von zwei oder mehr nebeneinander angeordneten Bildgeberbereichen eines einheitlichen Bildgebers oder von zwei oder mehr nebeneinander angeordneten eigenständigen Bildgebern bereitgestellt wird. Das Quellbild kann dabei von jedem der vorhandenen Bildgeberbereiche vollständig bereitgestellt werden, d.h. das Quellbild wird entsprechend der Anzahl an Bildgeberbereichen vervielfacht bereitgestellt, oder es werden auf jedem Bildgeberbereich nur einzelne Abschnitte des Quellbildes bereitgestellt, die zusammen das vollständige Quellbild ergeben.

Entsprechend der Einteilung des optischen Systems in zwei oder mehr Teilsysteme sind die Einzelspiegel der Auskoppelanordnung in zwei oder mehr Gruppen unterteilt. Jede Gruppe von Einzelspiegeln ist einem jeweiligen der mehreren Bildgeberbereiche zugeordnet und koppelt nur die von diesem Bildgeberbereich ausgehenden Lichtstrahlenbündel aus dem Lichtleiter zum Auge hin aus. Weiterhin sind die Einzelspiegel der zwei oder mehr Gruppen von Einzelspiegeln in Lichtausbreitungsrichtung abwechselnd angeordnet. Dies bedeutet, dass zwei in Lichtausbreitungsrichtung unmittelbar benachbarte Einzelspiegel zu zwei unterschiedlichen Gruppen von Einzelspiegeln gehören, und somit diese zwei unmittelbar benachbarten Einzelspiegel Lichtstrahlenbündel aus dem Lichtleiter auskoppeln, die von zwei unterschiedlichen Bildgeberbereichen ausgehen. Da zwei unmittelbar benachbarte Einzelspiegel i.A. vom Auge des Benutzers gleichzeitig gesehen werden können, werden somit Lücken in dem virtuellen Bild des Quellbildes sicher vermieden. Es ist lediglich dafür Sorge zu tragen, dass beim Benutzer stets der gleiche Bildeindruck entsteht, unabhängig davon, ob das wahrgenommene Licht von dem einen oder dem anderen Bildgeberbereich ausgeht. Dies kann durch einen softwaremäßigen Vorhalt in einem oder mehreren der Bildgeberbereiche erreicht werden, der dafür sorgt, dass Lichtstrahlenbündel, die von einem gleichen Feldpunkt des Quellbildes ausgehen, auf der Netzhaut ideal übereinander liegen, um Doppelbilder und Maßstabsverzerrungen zu vermeiden.

Das erfindungsgemäße optische System hat des Weiteren den Vorteil, dass jeder Einzelspiegel der mehreren Gruppen von Einzelspiegeln über sehr viel Freiheitsgrade der optischen Abbildung verfügt, wie beispielsweise eine große Anzahl von Koeffizienten eines Freiformpolynomes und/oder einer individuellen Kippung des Einzelspiegels, so dass sich mit dem erfindungsgemäßen optischen System eine sehr gute Abbildungsqualität und Verzeichnungsfreiheit erreichen lässt.

Da die gesamte optisch abbildende Wirkung in die Einzelspiegel gelegt werden kann und außerdem die Richtung der Lichtführung im Lichtleiter durch die Ausrichtung der Einzelspiegel individuell angepasst werden kann, lässt sich ein sehr schmales, kompaktes HMD mit großem Gesichtsfeldbereich mit minimalem Aufwand bereitstellen. Wie bereits erwähnt, werden im Idealfall keine weiteren optisch abbildenden Bauelemente benötigt, wie sie bei den im Stand der Technik bekannten HMDs beispielsweise an den äußeren Ecken des Lichtleiters in der Nähe des Bildgebers notwendig werden.

Die Propagation des Lichtes im Lichtleiter kann durch Reflexion an gegenüberliegenden Flächen des Lichtleiters erfolgen. Es ist aber ebenso im Rahmen der vorliegenden Erfindung möglich, dass die Lichtstrahlenbündel, die vom Quellbild ausgehen, ohne vorherige Reflexion unmittelbar auf die Einzelspiegel einfallen.

Bevorzugte Ausgestaltungen des erfindungsgemäßen optischen Systems werden nachfolgend beschrieben.

Vorzugsweise weisen alle oder einige der Einzelspiegel eine gekrümmte optisch abbildende Spiegelfläche auf. Für die Form der gekrümmten optisch abbildenden Spiegelfläche der Einzelspiegel sowie die Kippung der einzelnen Spiegelflächen stehen viele optische Freiheitsgraden zur Verfügung, so dass die optimale optische Abbildungsqualität erreicht werden kann. So ist es möglich, die Spiegelfläche einiger oder aller Einzelspiegel als Freiformfläche auszubilden.

Brennpunkte der Einzelspiegel liegen vorzugsweise in einer Ebene, in der das Quellbild von dem ersten bzw. zumindest einem zweiten Bildgeberbereich bereitgestellt wird. Mit anderen Worten befindet sich in dieser Ausgestaltung das Quellbild in der durch die Brennpunkte der Einzelspiegel aufgespannten Brennebene der Auskoppelanordnung. Der gesamte Lichtbündeldurchmesser am Einkoppelort des vom Quellbild ausgehenden Lichtes in den Lichtleiter kann somit klein gehalten werden. Von einzelnen Feldpunkten des Quellbildes ausgehende und in den Lichtleiter eingekoppelte Lichtstrahlenbündel werden über die Einzelspiegel entsprechend in parallele Lichtstrahlenbündel überführt. Die Gesamtheit der parallelen Lichtstrahlenbündel überlagert sich dann in der Austrittspupille des optischen Systems.

Vorzugsweise sind quellbildseitige Gesichtsfeldbereiche von jeweils zwei in Lichtausbreitungsrichtung aufeinanderfolgenden Einzelspiegeln der ersten Gruppe disjunkt, und ebenso sind quellbildseitige Gesichtsfeldbereiche von jeweils zwei in Lichtausbreitungsrichtung aufeinanderfolgenden Einzelspiegeln der zumindest einen zweiten Gruppe vorzugsweise disjunkt.

In dieser Ausgestaltung werden auf dem jeweiligen Bildgeberbereich nur diskret beabstandete Quellbildbereiche des Quellbildes benötigt, so dass nicht auf jedem Bildgeberbereich das vollständige Quellbild bereitgestellt werden muss. Da die Abstände und damit die Brennweiten der Einzelspiegel zu den Bildgeberbereichen unterschiedlich sind, ist es vorteilhaft, wenn diese Brennweitendifferenzen softwaremäßig auf dem jeweiligen Bildgeberbereich vorgehalten werden.

Weiter vorzugsweise sind ein quellbildseitiger Gesichtsfeldbereich eines Einzelspiegels der ersten Gruppe und ein quellbildseitiger Gesichtsfeldbereich eines zu diesem Einzelspiegel unmittelbar benachbarten Einzelspiegels der zumindest einen zweiten Gruppe überlappend.

Wie bereits oben erwähnt, kann durch einen softwaremäßigen Vorhalt bei zumindest einem der Bildgeberbereiche dafür gesorgt werden, dass Lichtstrahlenbündel, die von den beiden Bildgeberbereichen von einem selben Feldpunkt des Quellbildes ausgehen, auf der Netzhaut ideal übereinander liegen, so dass Doppelbilder und Maßstabsverzerrungen vermieden werden.

Ein bevorzugter Abstand von in der Lichtausbreitungsrichtung aufeinanderfolgenden Einzelspiegeln der ersten Gruppe liegt in einem Bereich von 3 mm bis 5 mm, und kann beispielsweise 4 mm betragen.

Ein solcher Abstand ist gut an die typische Größe der Augenpupille eines erwachsenen Menschen angepasst, die bei etwa 3 mm liegt. Mit einem Abstand von in dem angegebenen Bereich sieht das Auge stets nur einen Einzelspiegel jeder Gruppe gleichzeitig.

Ein Abstand in Lichtausbreitungsrichtung zwischen einem Einzelspiegel der ersten Gruppe und einem zu diesem Einzelspiegel unmittelbar benachbarten Einzelspiegel der zumindest einen zweiten Gruppe liegt vorzugsweise in einem Bereich von 1 bis 3 mm.

Somit befinden sich bei einer typischen Augenpupillengröße von 3 mm in einem Gebiet des Lichtleiters, das vom Auge des Benutzer mit einer festen Blickrichtung gleichzeitig erfasst wird, stets jeweils ein Einzelspiegel aus mehreren unterschiedlichen Gruppen, so dass gleichzeitig Lichtstrahlenbündel aus allen Bildgeberbereichen zur Übertragung des gleichen Feldpunktes des Quellbildes zum Auge beitragen.

Die Einzelspiegel sind vorzugsweise miniaturisiert ausgebildet und weisen jeweils eine Kantenabmessung in Lichtausbreitungsrichtung in einem Bereich von 0,5 bis 2 mm auf. Die Einzelspiegel können rechteckig, insbesondere quadratisch, aber auch rund sein. Im letzteren Fall ist unter der Kantenabmessung der Durchmesser der Einzelspiegel zu verstehen. In Richtung senkrecht zur Lichtausbreitungsrichtung und parallel zu den Außenflächen des Lichtleiters können die Einzelspiegel eine größere Abmessung als 2 mm aufweisen, d.h. die Einzelspiegel können streifenförmig ausgebildet sein.

Mit einer Dimensionierung der Einzelspiegel wie vorstehend angegeben wird eine hinreichend gute Auflösung der Abbildung erzeugt. Andererseits beeinträchtigen die Einzelspiegel die "See Through"-Funktion des optischen Systems kaum, so dass der Benutzer gut durch den Lichtleiter hindurchblicken und die Umgebung wahrnehmen kann.

Die Einzelspiegel können vollreflektierend sein, was den Vorteil einer hohen Kontraststärke des virtuellen Bildes hat. Die Einzelspiegel können jedoch auch teilreflektierend und teildurchlässig sein, was den Vorteil hat, dass die Einzelspiegel die Wahrnehmung der Umgebung durch den Lichtleiter hindurch noch weniger beeinträchtigen.

Die Einzelspiegel können durch lokale Brechungsindex-Sprünge im Material des Lichtleiters realisiert sein, wodurch sie teilreflektiv und -durchlässig sind. Die Einzelspiegel können aber auch durch reflektierende plättchenförmige Elemente, die in den Lichtleiter eingebettet sind, realisiert sein.

Die Auskoppelanordnung kann ein Array von Einzelspiegeln aufweisen, wobei das Array mehrere Reihen von Einzelspiegeln aufweist, wobei sich jede Reihe in Lichtausbreitungsrichtung erstreckt und in jeder Reihe Einzelspiegel der ersten Gruppe und Einzelspiegel der zumindest einen zweiten Gruppe abwechselnd angeordnet sind. Wie bereits oben erwähnt, kann anstelle einer mehrreihigen Anordnung auch eine einreihige Anordnung aus streifenförmigen Einzelspiegeln gewählt werden.

Vorzugsweise ist der Lichtleiter ein Brillenglas. Es versteht sich, dass ein solches Brillenglas auch aus Kunststoff bestehen kann.

Typischerweise ist ein Brillenglas gekrümmt. Das erfindungsgemäße optische System erlaubt ohne Einschränkung die Verwendung eines gekrümmten Lichtleiters aufgrund der Ausgestaltung der Auskoppelanordnung mit Einzelspiegeln, wie oben beschrieben. Das erfindungsgemäße optische System zeichnet sich somit durch eine hohe Ästhetik aus, die die zur Akzeptanz bei Nutzern beiträgt.

Weiter erfindungsgemäß wird eine Datenbrille mit einem optischen System nach einer oder mehreren der oben beschriebenen Ausgestaltungen bereitgestellt.

Die erfindungsgemäße Datenbrille hat die gleichen Vorteile und Merkmale wie das erfindungsgemäße optische System wie oben beschrieben.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine Ansicht von oben auf ein optisches System zum Erzeugen eines virtuellen Bildes aus einem Quellbild;
- Fig. 2: eine Ansicht von vorn auf das optische System; und
- Fig. 3: eine weitere Ansicht von oben auf das optische System in Fig. 1 mit Lichtstrahlengang.

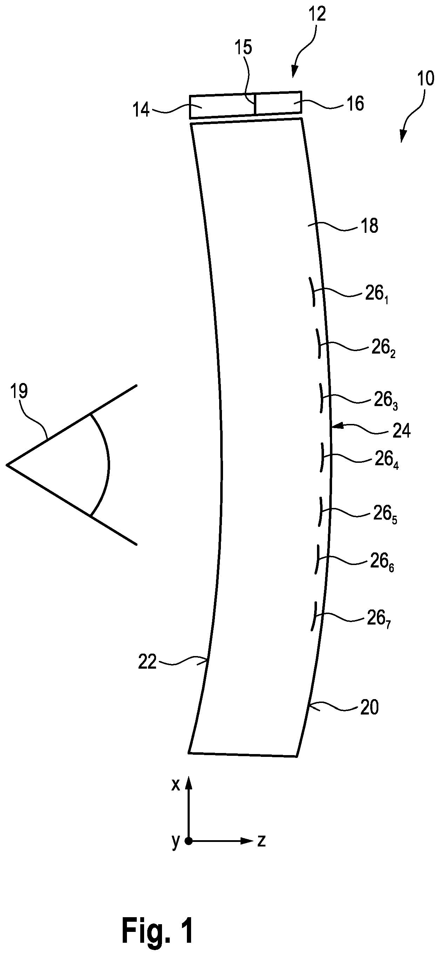

In Fig. 1 ist ein mit dem allgemeinen Bezugszeichen 10 versehenes optisches System zum Erzeugen eines virtuellen Bildes von einem Quellbild, das von einer Bildgeberanordnung 12 bereitgestellt wird, dargestellt. Das optische System 10 wird im bestimmungsgemäßen Gebrauch am Kopf eines Benutzers getragen. Fig. 1 zeigt eine Ansicht von oben auf das optische System 10, wenn es am Kopf getragen wird.

Die Bildgeberanordnung 12 weist einen ersten Bildgeberbereich 14 und einen zweiten Bildgeberbereich 16 auf. Der erste und zweite Bildgeberbereich 14 und 16 sind nebeneinander angeordnet und können zwei separate Displays sein, oder die beiden Bildgeberbereiche 14 und 16 können zwei nebeneinander angeordnete Bereiche eines einzelnen Displays sein. Eine Linie 15 in Fig. 1 deutet die Trennlinie zwischen den beiden Bildgeberbereichen 14 und 16 an.

Das Quellbild kann auf den Bildgeberbereichen 14 und 16 als von einer Kamera (nicht dargestellt) generiertes Bild oder Video oder als Computer-generiertes Bild bzw. Video bereitgestellt werden. Das Quellbild kann auf beiden Bildgeberbereichen 14 und 16 jeweils als Ganzes, d.h. vollständig bereitgestellt werden, oder es werden auf den beiden Bildgebern 14 und 16 nur einzelne Quellbildbereiche bereitgestellt, derart, dass die Vereinigungsmenge dieser Quellbildbereiche das vollständige Quellbild ergibt.

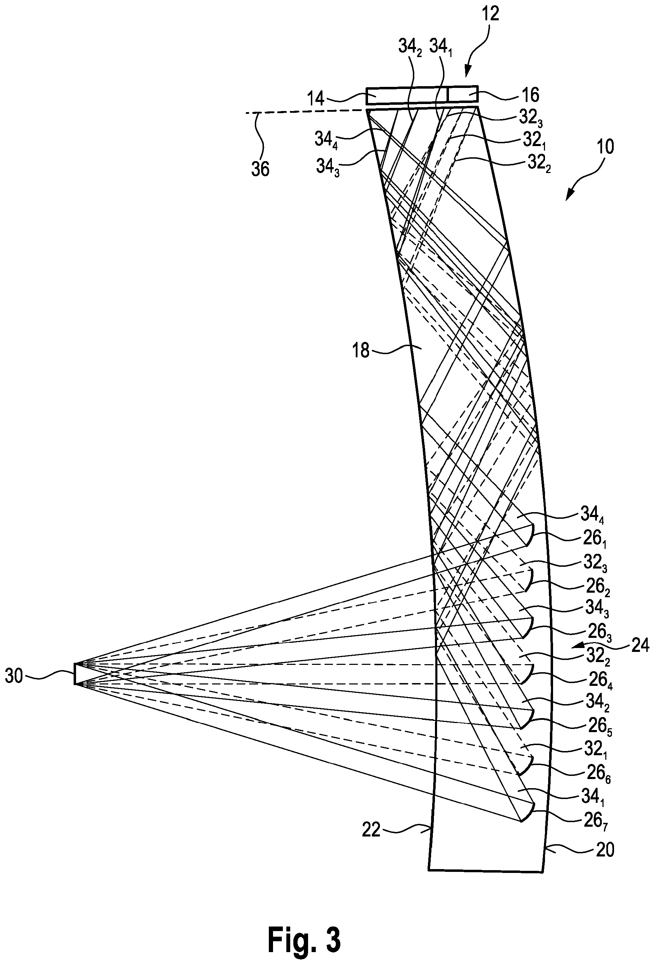

Das optische System 10 weist weiterhin einen Lichtleiter 18 auf, in den Licht, das von dem von den Bildgeberbereichen 14 und 16 bereitgestellten Quellbild ausgeht, eingekoppelt wird. Ein Lichtstrahlengang ausgehend von den Bildgebern 14 und 16 zum Auge des Benutzers wird später mit Bezug auf Fig. 3 noch beschrieben.

Der Lichtleiter 18 ist als Brillenglas ausgebildet, das aus einem Glas oder Kunststoff gefertigt sein kann. Der Lichtleiter 18 wird im bestimmungsgemäßen Gebrauch vor einem Auge 19 des Benutzers getragen. Im gezeigten Ausführungsbeispiel ist dies das linke Auge des Benutzers. Der Lichtleiter 18 kann wie dargestellt insbesondere gekrümmt sein, wie dies bei üblichen Brillengläsern ebenso der Fall ist.

Fig. 1 zeigt eine Ansicht von oben auf den Lichtleiter 18, d.h. auf die obere Schmalseite des Brillenglases. In Fig. 1 ist zur Vereinfachung der Beschreibung ein Koordinatensystem mit einer z-Achse, einer x-Achse und einer y-Achse gezeigt, wobei die y-Achse senkrecht zur Zeichenebene in Fig. 1 verläuft. Die x-Achse ist die Lichtausbreitungsrichtung des Lichts im Lichtleiter 18 und verläuft, wenn das optische System 10 am Kopf des Benutzers getragen wird, in horizontaler Richtung. Die z-Richtung ist die Blickrichtung des Auges 19 durch den Lichtleiter 18 hindurch. Die y-Richtung bezeichnet entsprechend die vertikale Richtung.

Der Lichtleiter 18 weist eine erste Außenfläche 20 und eine zweite Außenfläche 22 auf. Wenn das optische System 10 am Kopf eines Benutzers getragen wird, bildet die Außenfläche 20 die vom Auge 19 abgewandte vordere Außenfläche des Lichtleiters 18, und die Außenfläche 22 bildet die dem Auge 19 des Benutzers zugewandte rückwärtige Außenfläche des Lichtleiters 18.

Zwischen diesen beiden Außenflächen 20 und 22 kann Licht, das von den Bildgebern 14 und 16 ausgehend in den Lichtleiter 18 eingekoppelt wird, gegebenenfalls durch Totalreflexion an den Außenflächen 20 und 22, oder ohne Reflexionen in dem Lichtleiter 18 propagieren. Die Propagationshauptrichtung des Lichtes (x-Richtung) wird in der vorliegenden Beschreibung als die Lichtausbreitung des Lichtleiters 18 bezeichnet.

Das optische System 10 weist weiterhin eine Auskoppelanordnung 24 auf, die dazu dient, Lichtstrahlenbündel, die ausgehend von den Bildgeberbereichen 14 und 16 in den Lichtleiter 18 eingekoppelt werden, aus dem Lichtleiter 18 zum Auge 19 hin auszukoppeln, wie dies später noch beschrieben wird.

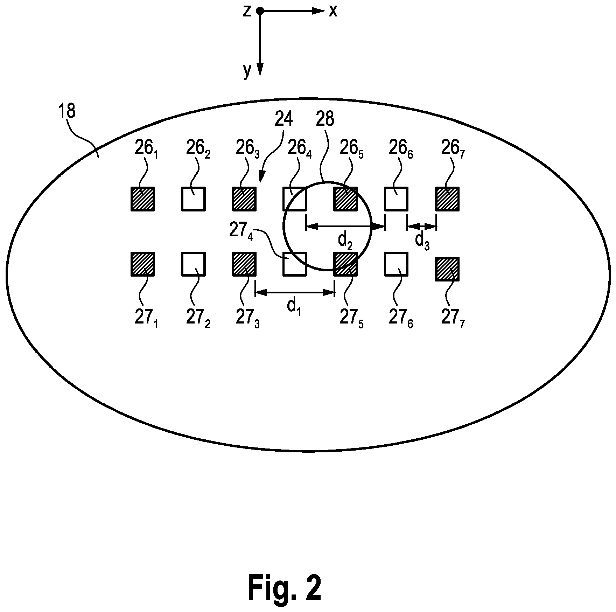

Zusätzlich mit Bezug auf Fig. 2 wird die Auskoppelanordnung 24 zunächst beschrieben. In Fig. 2 ist die Bildgeberanordnung 12 nicht gezeigt.

Gemäß Fig. 1 und 2 weist die Auskoppelanordnung 24 eine Mehrzahl an Einzelspiegeln 26₁ bis 26₇ und 27₁ bis 27₇ auf. Unter dem Begriff 'Spiegel' ist in der vorliegenden Beschreibung synonym die Spiegelfläche des Spiegels zu verstehen, da die Einzelspiegel keinen Rahmen oder Fassung aufweisen. Die Einzelspiegel 26₁ bis 26₇ und die Einzelspiegel 27₁ bis 27₇ sind in Lichtausbreitungsrichtung des Lichtleiters 18 jeweils voneinander beabstandet. Die Einzelspiegel 26₁ bis 26₇ bilden eine erste Reihe von Einzelspiegeln, die sich in Lichtausbreitungsrichtung des Lichtleiters 18 erstreckt, und die Einzelspiegel 27₁ bis 27₇ bilden eine zweite Reihe von Einzelspiegeln, die sich ebenfalls in Lichtausbreitungsrichtung des Lichtleiters 18 erstreckt und von der ersten Reihe der Einzelspiegel 26₁ bis 26₇ senkrecht (y-Richtung) zur Lichtausbreitungsrichtung beabstandet ist. Sowohl die Gesamtanzahl an Einzelspiegeln als auch die Anzahl an Reihen von Einzelspiegeln sind hier nur exemplarisch zu verstehen, wobei die Gesamtanzahl an Einzelspiegeln größer oder kleiner als die in der Zeichnung gezeigte Gesamtanzahl sein kann, und es können weniger oder mehr als zwei Reihen von Einzelspiegeln vorgesehen sein. Anstelle einer zweiten Reihe von Einzelspiegeln 27₁ bis 27₇ kann beispielsweise nur eine Reihe von Einzelspiegeln 26₁ bis 26₇ vorhanden sein, wobei die Einzelspiegel 26₁ bis 26₇ in der y-Richtung dann vorzugsweise eine größere Erstreckung als gezeigt aufweisen. Beispielsweise können sich die Einzelspiegel 26₁ bis 26₇ in y-Richtung bis zu der Stelle erstrecken, an der sich in dem gezeigten Ausführungsbeispiel die unteren Kanten (in y-Richtung) der Einzelspiegel 27₁ bis 27₇ befinden.

Die Einzelspiegel 26₁ bis 26₇ und 27₁ bis 27₇ sind in den Lichtleiter 18 eingebettet und können als Brechungsindexsprünge im Material des Lichtleiters 18 ausgebildet sein, oder als beispielsweise reflektive, bspw. sehr dünne metallische Plättchen, die in das Material des Lichtleiters 18 eingebettet sind.

Entsprechend der Anzahl an Bildgebern, hier zwei Bildgeberbereichen 14 und 16, sind die Einzelspiegel 26₁ bis 26₇ sowie die Einzelspiegel 27₁ bis 27₇ in Gruppen, hier zwei Gruppen, eingeteilt. Eine erste Gruppe von Einzelspiegeln 26₁, 26₃, 26₅ und 26₇ und von Einzelspiegeln 27₁, 27₃, 27₅ und 27₇ ist dazu angeordnet und ausgelegt, nur Lichtstrahlenbündel, die von einem der beiden Bildgeberbereiche 14 oder 16 ausgehen, aus dem Lichtleiter 18 zum Auge 19 hin auszukoppeln, und eine zweite Gruppe von Einzelspiegeln 26₂, 26₄, 26₆ und von Einzelspiegeln 27₂, 27₄, 27₆ sind dazu ausgelegt, nur Lichtstrahlenbündel, die von dem anderen der beiden Bildgeberbereiche 14 und 16 ausgehen, zum Auge hin auszukoppeln. Zur einfacheren Unterscheidung sind die Einzelspiegel 26₁, 26₃, 26₅, 26₇ und 27₁, 27₃, 27₅, 27₇ der ersten Gruppe schraffiert und die Einzelspiegel 26₂, 26₄, 26₆ sowie 27₂, 27₄, 27₆ der zweiten Gruppe weiß dargestellt.

Wie aus Fig. 2 hervorgeht, wechseln sich Einzelspiegel der ersten Gruppe von Einzelspiegeln mit Einzelspiegeln der zweiten Gruppe von Einzelspiegeln in Lichtausbreitungsrichtung des Lichtleiters 18 (x-Richtung) ab. Somit gehören jeweils unmittelbar einander benachbarte Einzelspiegel, beispielsweise die Einzelspiegel 26₆ und 26₇, zwei verschiedenen Gruppen von Einzelspiegeln an.

Ein Abstand d₁ von in Lichtausbreitungsrichtung des Lichtleiters 18 aufeinanderfolgenden Einzelspiegeln 27₁, 27₃, 27₅, 27₇ der ersten Gruppe, wie für die Einzelspiegel 27₃ und 27₅ gezeigt, liegt in einem Bereich von 3 mm bis 5 mm und beträgt beispielsweise 4 mm. Der Abstand d₁ ist gleich oder größer als die Größe der Augenpupille eines erwachsenen Menschen, die bei etwa 3 mm liegt. Ein Abstand d₂ von in Lichtausbreitungsrichtung des Lichtleiters 18 aufeinanderfolgenden Einzelspiegeln 26₂, 26₄, 26₆ bzw. 27₂, 27₄, 27₆ der zweiten Gruppe, wie für die Einzelspiegel 26₄ und 26₆ gezeigt, liegt ebenfalls in einem Bereich von 3 mm bis 5 mm und beträgt beispielsweise 4 mm.

Ein Abstand d₃ in Lichtausbreitungsrichtung zwischen einem jeweiligen Einzelspiegel der ersten Gruppe und einem zu diesem Einzelspiegel unmittelbar benachbarten Einzelspiegel der zumindest einen zweiten Gruppe, wie für die Einzelspiegel 26₆ und 26₇ gezeigt ist, liegt in einem Bereich von 1 bis 3 mm und beträgt beispielsweise 2 mm.

Eine Kreislinie 28 in Fig. 2 deutet das Gebiet der Auskoppelanordnung 24 an, das von dem Auge 19 mit einer Pupillengröße von ca. 3 mm bei einer festen Blickrichtung (z-Richtung) gleichzeitig erfasst wird. Der Durchmesser dieses Bereichs, der durch die Kreislinie 28 angedeutet wird, ist somit kleiner als der Abstand d₂ bzw. d₁ zwischen benachbarten Einzelspiegeln derselben Gruppe. Das Auge 19 sieht also keine zwei in Lichtausbreitungsrichtung des Lichtleiters 18 aufeinander folgende Einzelspiegel derselben Gruppe gleichzeitig, kann jedoch und wird in der Regel zwei unmittelbar benachbarte Einzelspiegel verschiedener Gruppen gleichzeitig sehen.

In Fig. 2 sind die Einzelspiegel 26₁ bis 26₇ und 27₁ bis 27₇ als quadratische Einzelspiegel gezeigt, wobei dies jedoch nur beispielhaft ist. Die Einzelspiegel können auch allgemein mehreckig oder rund ausgebildet sein. Die Größe der Einzelspiegel kann miniaturisiert sein, beispielsweise in einem Bereich von 0,5 bis 2 mm liegen, wobei hierunter eine Kantenabmessung der Einzelspiegel in Lichtausbreitungsrichtung zu verstehen ist. Beispielsweise weisen die Einzelspiegel 26₁ bis 26₇ und 27₁ und 27₇ jeweils eine Kantenabmessung von 1 mm in Lichtausbreitungsrichtung auf. In y-Richtung können sie eine größere Abmessung aufweisen, insbesondere wenn nur eine Reihe von Einzelspiegeln vorhanden ist.

Weitere Einzelheiten des optischen Systems 10 werden zusätzlich mit Bezug auf Fig. 3 beschrieben. Fig. 3 zeigt einen Gesamtlichtstrahlengang, ausgehend von den Bildgeberbereichen 14 und 16, bis zu einer Austrittspupille 30 des optischen Systems 10. Die Austrittspupille 30 fällt, wenn das optische System 10 am Kopf eines Benutzers getragen wird, etwa mit der Eintrittspupille bzw. der Eyebox des Auges 19 (Fig. 1) des Benutzers zusammen. Der Benutzer sieht ein virtuelles Bild des Quellbildes, das jenseits der Außenfläche 20 des Lichtleiters 18 mit der real wahrgenommenen Umgebung überlagert erscheint.

In Fig. 3 sind beispielhaft sieben Lichtstrahlenbündel gezeigt, wobei Lichtstrahlenbündel 32₁, 32₂ und 32₃, die von dem Bildgeberbereich 16 ausgehen, mit unterbrochenen Linien dargestellt sind, und wobei Lichtstrahlenbündel 34₁, 34₂, 34₃, 34₄, die von dem Bildgeberbereich 14 ausgehen, mit durchgezogenen Linien gezeigt sind.

Die Lichtstrahlenbündel 32₁ bis 32₃ und 34₁ bis 34₄ werden, nachdem sie ausgehend von dem Quellbild, das von den Bildgeberbereichen 14 und 16 bereitgestellt wird, in den Lichtleiter 18 eingekoppelt sind, im gezeigten Ausführungsbeispiel unter Reflexion, insbesondere Totalreflexion, an den Außenflächen 20 und 22 in dem Lichtleiter 18 in Lichtausbreitungsrichtung des Lichtleiters 18 zu der Auskoppelanordnung 24 geführt. Die Lichtstrahlenbündel 32₁, 32₂, 32₃, die von dem Bildgeberbereich 16 ausgehen, fallen dann auf die Einzelspiegel 26₅, 26₄, 26₂ der zweiten Gruppe von Einzelspiegeln ein. Die Lichtstrahlenbündel 34₁, 34₂, 34₃, 34₄, die von dem Bildgeberbereich 14 ausgehen, fallen auf die Einzelspiegel 26₇, 26₅, 26₃, 26₁ der ersten Gruppe von Einzelspiegeln ein. Die Einzelspiegel 27₁ bis 27₇ sind in Fig. 3 nicht zu sehen, es gilt aber das Gleiche wie für die Einzelspiegel 26₁ bis 26₇. In anderen Ausführungsvarianten können einzelne oder alle Lichtstrahlenbündel 32₁ bis 32₃ und 34₁ bis 34₄ nach ihrer Einkopplung in den Lichtleiter 18 unmittelbar auf die Einzelspiegel einfallen, ohne zuvor ein- oder mehrfach durch Reflexion umgelenkt worden zu sein.

Betrachtet man die Lichtstrahlenbündel 32₁ und 34₁, die von dem Bildgeberbereich 14 und von dem Bildgeberbereich 16 von zumindest näherungsweise gleichen Feldpunkten des Quellbildes ausgehen, so fallen diese Lichtstrahlenbündel auf unmittelbar benachbarte Einzelspiegel 26₆ und 26₇ ein, die zu verschiedenen Gruppen von Einzelspiegeln wie oben beschrieben gehören. Die beiden Einzelspiegel 26₆ und 26₇ liegen innerhalb eines Gebietes des Lichtleiters 18, der vom Auge 19 des Benutzers gleichzeitig erfasst wird, wie bereits zuvor mit Bezug auf die Kreislinie 28 in Fig. 2 beschrieben wurde. Durch einen softwaremäßigen Vorhalt an einem der oder beiden Bildgeberbereichen 14 oder 16 kann dafür Sorge getragen werden, dass Lichtstrahlenbündel, die von einem selben Feldpunkt des Quellbildes ausgehen, auf der Netzhaut des Auges ideal übereinanderliegen, um Doppelbilder und Maßstabsverzerrungen zu vermeiden.

Wie in Fig. 3 angedeutet ist, weisen die Einzelspiegel 26₁ bis 26₇ (ebenso die Einzelspiegel 27₁ bis 27₇) jeweils eine gekrümmte optisch abbildende Spiegelfläche auf. Insbesondere können alle Einzelspiegel mit einer gekrümmten optisch abbildenden Spiegelfläche ausgebildet sein. Die Spiegelfläche einzelner oder aller Einzelspiegel 26₁ bis 26₇ und 27₁ bis 27₇ kann als Freiformfläche ausgebildet sein. Aufgrund der Ausgestaltung der Auskoppelanordnung 24 mit Einzelspiegeln besteht beim Optikdesign der Einzelspiegel ein sehr großer Bereich an Freiheitsgraden für die optische Abbildung, so dass die Qualität des virtuellen Bildes, das aus dem Quellbild erzeugt wird, optimiert werden kann.

Wie aus Fig. 3 weiter hervorgeht, liegen Brennpunkte der Einzelspiegel 26₁ bis 26₇ (und das Gleiche gilt für die Einzelspiegel 27₁ bis 27₇) in der Ebene 36 des Quellbildes. Da die Abstände und damit die Brennweiten der Einzelspiegel zu den Bildgeberbereichen 14 und 16 unterschiedlich sind, ist es vorteilhaft, wenn diese Brennweitendifferenzen softwaremäßig auf dem jeweiligen Bildgeberbereich 14 und/oder 16 vorgehalten werden.

Aufgrund des Abstandes d₁ bzw. d₂ in Lichtausbreitungsrichtung zwischen aufeinanderfolgenden Einzelspiegeln derselben Gruppe, der gleich oder größer als die Pupillengröße der Augenpupille gewählt ist, sind quellbildseitige Gesichtsfeldbereiche von jeweils zwei in der Lichtausbreitungsrichtung aufeinanderfolgenden Einzelspiegeln derselben Gruppe disjunkt. Demgegenüber sind quellbildseitige Gesichtsfeldbereiche unmittelbar benachbarter Einzelspiegel, die der ersten und der zweiten Gruppe angehören, einander überlappend. Wie bereits zuvor erwähnt, kann durch einen softwaremäßigen Vorhalt an einem der Bildgeber 14 und 16 dafür Sorge getragen werden, dass diese Gesichtsfeldbereiche, die vom Auge 19 des Benutzers gleichzeitig erfasst werden, in der Austrittspupille 30 optimal aneinander liegen.

Aufgrund der Ausgestaltung der Auskoppelanordnung 24 durch eine Vielzahl von Einzelspiegeln 26₁ bis 26₇ und 27₁ bis 27₇ bringen diese Einzelspiegel vorzugsweise die gesamte optische Abbildungswirkung zum Erzeugen des virtuellen Bildes aus dem Quellbild auf.

Die Einzelspiegel 26₁ bis 26₇ bzw. 27₁ bis 27₇ können vollreflektierend oder teilreflektierend/teildurchlässig für Licht im sichtbaren Spektrum sein. Die "See-Through"-Funktion des optischen Systems 10 ist sowohl bei vollreflektierender als auch bei teilreflektierender/teildurchlässiger Ausgestaltung der Einzelspiegel gewährleistet.

In einem Beispiel weist der Lichtleiter 18, der als Brillenglas ausgebildet sein kann, eine Dicke (in z-Richtung) von etwa 5 mm auf. Der Lichtleiter 18 kann beispielsweise einen Krümmungsradius von 100 mm aufweisen. Mit diesen Parametern kann ein Gesichtsfeld des optischen Systems 10 von 45° in der horizontalen Richtung erreicht werden, was bereits sehr gut ist.

Es versteht sich, dass die Darstellungen in Fig. 1, 2 und 3 stark vergrößert sind. In der Praxis entspricht die Ausdehnung des Lichtleiters 18 insgesamt der Ausdehnung eines üblichen Brillenglases.

Weiterhin ist es möglich, das optische System 10 nicht nur in zwei Teilsysteme mit zwei Bildgeberbereichen und zwei Gruppen von Einzelspiegeln wie in der Zeichnung gezeigt ist, sondern auch in drei oder mehr Teilsysteme mit einer entsprechenden Anzahl an Bildgerbereichen und Gruppen von Einzelspiegeln unterteilt sein kann.

Das optische System 10 ist vorzugsweise als Datenbrille ausgebildet bzw. eine Datenbrille weist ein solches System 10 auf.

## Patentansprüche

1. Optisches System zum Erzeugen eines virtuellen Bildes von einem von einer Bildgeberanordnung (12) bereitgestellten Quellbild, wobei das optische System (10) die Bildgeberanordnung (12), zumindest einen vor einem Auge (19) zu tragenden Lichtleiter (18) und eine reflektive Auskoppelanordnung (24) aufweist, wobei der Lichtleiter (18) dazu ausgelegt ist, vom Quellbild ausgehende und in den Lichtleiter (18) eingekoppelte Lichtstrahlenbündel in einer Lichtausbreitungsrichtung zu der reflektiven Auskoppelanordnung (24) zu führen, die dazu ausgelegt ist, die Lichtstrahlenbündel aus dem Lichtleiter (18) in eine Austrittspupille (30) des optischen Systems (10) auszukoppeln, wobei das Quellbild jeweils von einem ersten Bildgeberbereich (16) und zumindest einem dem ersten Bildgeberbereich (16) benachbarten zweiten Bildgeberbereich (14) der Bildgeberanordnung (12) bereitgestellt wird, **dadurch gekennzeichnet, dass** die Auskoppelanordnung (24) eine Mehrzahl von Einzelspiegeln (26₁ bis 26₇) aufweist, die in Lichtausbreitungsrichtung jeweils voneinander beabstandet angeordnet sind, wobei eine erste Gruppe von Einzelspiegeln (26₁, 26₃, 26₅, 26₇) erste Lichtstrahlenbündel, die von dem ersten Bildgeberbereich (14) ausgehen, aus dem Lichtleiter (18) in die Austrittspupille (30) auskoppelt, und zumindest eine zweite Gruppe von Einzelspiegeln (26₂, 26₄, 26₆) zweite Lichtstrahlenbündel, die von dem zumindest einen zweiten Bildgeberbereich (16) ausgehen, aus dem Lichtleiter (18) in die Austrittspupille (30) auskoppelt, und dass die Einzelspiegel (26₁, 26₃, 26₅, 26₇) der ersten Gruppe und die Einzelspiegel (26₂, 26₄, 26₆) der zumindest einen zweiten Gruppe in Lichtausbreitungsrichtung abwechselnd angeordnet sind.

2. Optisches System nach Anspruch 1, wobei die Einzelspiegel (26₁ bis 26₇) eine gekrümmte optisch abbildende Spiegelfläche aufweisen.

3. Optisches System nach Anspruch 2, wobei die Spiegelfläche der Einzelspiegel (26₁ bis 26₇) als Freiformfläche ausgebildet ist.

4. Optisches System nach Anspruch 2 oder 3, wobei Brennpunkte der Einzelspiegel (26₁ bis 26₇) in einer Ebene liegen, in der das Quellbild von dem ersten bzw. dem zumindest einen zweiten Bildgeberbereich (14, 16) bereitgestellt wird.

5. Optisches System nach einem der Ansprüche 1 bis 4, wobei quellbildseitige Gesichtsfeldbereiche von jeweils zwei in Lichtausbreitungsrichtung aufeinanderfolgenden Einzelspiegeln (26₁, 26₃; 26₃, 26₅; 26₅, 26₇) der ersten Gruppe disjunkt sind, und wobei quellbildseitige Gesichtsfeldbereiche von jeweils zwei in Lichtausbreitungsrichtung aufeinanderfolgenden Einzelspiegeln (26₂, 26₄; 26₄, 26₆) der zumindest einen zweiten Gruppe disjunkt sind.

6. Optisches System nach einem der Ansprüche 1 bis 5, wobei ein quellbildseitiger Gesichtsfeldbereich eines Einzelspiegels (26₇) der ersten Gruppe und ein quellbildseitiger Gesichtsfeldbereich eines zu diesem Einzelspiegel unmittelbar benachbarten Einzelspiegels (26₆) der zumindest einen zweiten Gruppe überlappend sind.

7. Optisches System nach einem der Ansprüche 1 bis 6, wobei ein Abstand von in Lichtausbreitungsrichtung aufeinanderfolgenden Einzelspiegeln (26₁, 26₃; 26₃, 26₅; 26₅, 26₇) der ersten Gruppe in einem Bereich von 3 mm bis 5 mm liegt.

8. Optisches System nach einem der Ansprüche 1 bis 7, wobei ein Abstand zwischen einem Einzelspiegel (26₇) der ersten Gruppe und einem zu diesem Einzelspiegel unmittelbar benachbarten Einzelspiegel (26₆) der zumindest einen zweiten Gruppe in einem Bereich von 1 bis 3 mm liegt.

9. Optisches System nach einem der Ansprüche 1 bis 8, wobei die Einzelspiegel (26₁ bis 26₇) jeweils eine Kantenabmessung in Lichtausbreitungsrichtung in einem Bereich von 0,5 bis 2 mm aufweisen.

10. Optisches System nach einem der Ansprüche 1 bis 9, wobei die Einzelspiegel (26₁ bis 26₇) vollreflektierend sind.

11. Optisches System nach einem der Ansprüche 1 bis 9, wobei die Einzelspiegel (26₁ bis 26₇) teilreflektierend und teildurchlässig sind.

12. Optisches System nach einem der Ansprüche 1 bis 11, wobei die Auskoppelanordnung (24) mehrere Reihen von Einzelspiegeln (26₁ bis 26₇, 27₁ bis 27₇) aufweist, wobei sich jede Reihe in Lichtausbreitungsrichtung erstreckt und in jeder Reihe Einzelspiegel (26₁, 26₃, 26₅, 26₇, 27₁, 27₃, 27₅, 27₇) der ersten Gruppe und Einzelspiegel (26₂, 26₄, 26₆; 27₂, 27₄, 27₆) der zumindest einen zweiten Gruppe abwechselnd angeordnet sind.

13. Optisches System nach einem der Ansprüche 1 bis 12, wobei der Lichtleiter (18) ein Brillenglas ist.

14. Optisches System nach Anspruch 13, wobei das Brillenglas gekrümmt ist.

15. Datenbrille, mit einem optischen System (10) nach einem der Ansprüche 1 bis 14.

## Claims

1. Optical system for generating a virtual image of a source image provided by an imager arrangement (12), wherein the optical system (10) comprises the imager arrangement (12), at least one light guide (18) to be worn in front of an eye (19) and a reflective output coupling arrangement (24), wherein the light guide (18) is designed to guide, in a light propagation direction, light beams that emanate from the source image and are input coupled into the light guide (18) to the reflective output coupling arrangement (24) which is designed to output couple the light beams from the light guide (18) into an exit pupil (30) of the optical system (10), wherein the source image is provided in each case by a first imager region (16) and at least one second imager region (14), adjacent to the first imager region (16), of the imager arrangement (12), **characterized in that** the output coupling arrangement (24) comprises a plurality of individual mirrors (26₁ to 26₇), which in each case are arranged at a distance from one another in the light propagation direction, wherein a first group of individual mirrors (26₁, 26₃, 26₅, 26₇) output couples first light beams, which emanate from the first imager region (14), from the light guide (18) into the exit pupil (30) and at least one second group of individual mirrors (26₂, 26₄, 26₆) output couples second light beams, which emanate from the at least one second imager region (16), from the light guide (18) into the exit pupil (30), and **in that** the individual mirrors (26₁, 26₃, 26₅, 26₇) of the first group and the individual mirrors (26₂, 26₄, 26₅) of the at least one second group are arranged in alternating fashion in the light propagation direction.

2. Optical system according to Claim 1, wherein the individual mirrors (26₁ to 26₇) have a curved optically imaging mirror surface.

3. Optical system according to Claim 2, wherein the mirror surface of the individual mirrors (26₁ to 26₇) is embodied as a free-form surface.

4. Optical system according to Claim 2 or 3, wherein foci of the individual mirrors (26₁ to 26₇) lie in a plane in which the source image of the first or the at least one second imager region (14, 16) is provided.

5. Optical system according to any of Claims 1 to 4, wherein source image-side field-of-view regions of in each case two individual mirrors (26₁, 26₃; 26₃, 26₅; 26₅, 26₇) of the first group following one another in the light propagation direction are disjoint, and wherein source image-side field-of-view regions of in each case two individual mirrors (26₂, 26₄; 26₄, 26₅) of the at least one second group following one another in the light propagation direction are disjoint.

6. Optical system according to any of Claims 1 to 5, wherein there is an overlap between a source image-side field-of-view region of an individual mirror (26₇) of the first group and a source image-side field-of-view region of an individual mirror (26₆) which belongs to the at least one second group and which is directly adjacent to this individual mirror.

7. Optical system according to any of Claims 1 to 6, wherein a distance between successive individual mirrors (26₁, 26₃; 26₃, 26₅; 26₅, 26₇) of the first group in the light propagation direction is in a range of between 3 mm and 5 mm.

8. Optical system according to any of Claims 1 to 7, wherein a distance between an individual mirror (26₇) of the first group and an individual mirror (26₆) which belongs to the at least one second group and which is directly adjacent to this individual mirror is in a range of between 1 and 3 mm.

9. Optical system according to any of Claims 1 to 8, wherein the individual mirrors (26₁ to 26₇) each have an edge dimension in the light propagation direction in a range of between 0.5 and 2 mm.

10. Optical system according to any of Claims 1 to 9, wherein the individual mirrors (26₁ to 26₇) are fully reflective.

11. Optical system according to any of Claims 1 to 9, wherein the individual mirrors (26₁ to 26₇) are partly reflective and partly transmissive.

12. Optical system according to any of Claims 1 to 11, wherein the output coupling arrangement (24) comprises a plurality of rows of individual mirrors (26₁ to 26₇, 27₁ to 27₇), wherein each row extends in the light propagation direction and individual mirrors (26₁, 26₃, 26₅, 26₇, 27₁, 27₃, 27₅, 27₇) of the first group and individual mirrors (26₂, 26₄, 26₆; 27₂, 27₄, 27₅) of the at least one second group are arranged in alternating fashion in each row.

13. Optical system according to any of Claims 1 to 12, wherein the light guide (18) is a spectacle lens.

14. Optical system according to Claim 13, wherein the spectacle lens is curved.

15. Pair of smartglasses, having an optical system (10) according to any of Claims 1 to 14.

## Revendications

1. Système optique permettant de générer une image virtuelle d'une image source fournie par un agencement d'imagerie (12), dans lequel le système optique (10), à savoir l'agencement d'imagerie (12), présente au moins un guide d'ondes optiques (18) à porter devant un oeil (19) et un agencement de découplage par réflexion (24), dans lequel le guide d'ondes optiques (18) est conçu pour guider des faisceaux de rayons lumineux, émanant de l'image source et injectés dans le guide d'ondes optiques (18) dans une direction de propagation de la lumière, vers l'agencement de découplage par réflexion (24) qui est conçu pour découpler les faisceaux de rayons lumineux du guide d'ondes optiques (18) dans une pupille de sortie (30) du système optique (10), dans lequel l'image source est fournie respectivement par une première zone d'imagerie (16) et au moins une deuxième zone d'imagerie (14) voisine de la première zone d'imagerie (16) de l'agencement d'imagerie (12), **caractérisé en ce que** l'agencement de découplage (24) présente une pluralité de miroirs individuels (26₁ à 26₇) qui sont disposés respectivement à distance les uns des autres, dans lequel un premier groupe de miroirs individuels (26₁, 26₃, 26₅, 26₇) découple des premiers faisceaux de rayons lumineux, qui émanent de la première zone d'imagerie (14), du guide d'ondes optiques (18) dans la pupille de sortie (30), et au moins un deuxième groupe de miroirs individuels (26₂, 26₄, 26₅) découple des deuxièmes faisceaux de rayons lumineux, qui émanent de ladite au moins une deuxième zone d'imagerie (16), du guide d'ondes optiques (18) dans la pupille de sortie (30), et **en ce que** les miroirs individuels (26₁, 26₃, 26₅, 26₇) du premier groupe et les miroirs individuels (26₂, 26₄, 26₅) dudit au moins un deuxième groupe sont disposés en alternance dans la direction de propagation de la lumière.

2. Système optique selon la revendication 1, dans lequel les miroirs individuels (26₁ à 26₇) présentent une surface de miroir d'imagerie optique courbe.

3. Système optique selon la revendication 2, dans lequel la surface de miroir des miroirs individuels (26₁ à 26₇) est réalisée comme une surface de forme libre.

4. Système optique selon la revendication 2 ou 3, dans lequel des foyers des miroirs individuels (26₁ à 26₇) sont situés dans un plan dans lequel l'image source est fournie par la première ou par ladite au moins une deuxième zone d'imagerie (14, 16).

5. Système optique selon l'une quelconque des revendications 1 à 4, dans lequel des zones de champ de vision côté image source sont disjointes de respectivement deux miroirs individuels (26₁, 26₃ ; 26₃, 26₅ ; 26₅, 26₇) du premier groupe, consécutifs dans la direction de propagation de la lumière, et dans lequel des zones de champ de vision côté image source sont distincts de respectivement deux miroirs individuels (26₂, 26₄ ; 26₄, 26₅) dudit au moins un deuxième groupe, consécutifs dans la direction de propagation de la lumière.

6. Système optique selon l'une quelconque des revendications 1 à 5, dans lequel une zone de champ de vision côté image source d'un miroir individuel (26₇) du premier groupe et une zone de champ de vision côté image source d'un miroir individuel (26₆), directement voisin de ce miroir individuel, dudit au moins un deuxième groupe, se chevauchent.

7. Système optique selon l'une quelconque des revendications 1 à 6, dans lequel une distance de miroirs individuels (26₁, 26₃ ; 26₃, 26₅ ; 26₅, 26₇) du premier groupe, consécutifs dans la direction de propagation de la lumière, est comprise dans une plage de 3 mm à 5 mm.

8. Système optique selon l'une quelconque des revendications 1 à 7, dans lequel une distance entre un miroir individuel (26₇) du premier groupe et un miroir individuel (26₆), directement voisin de ce miroir individuel, dudit au moins un deuxième groupe est comprise dans une plage de 1 à 3 mm.

9. Système optique selon l'une quelconque des revendications 1 à 8, dans lequel les miroirs individuels (26₁ à 26₇) présentent respectivement une dimension d'arête dans la direction de propagation de la lumière dans une plage de 0,5 à 2 mm.

10. Système optique selon l'une quelconque des revendications 1 à 9, dans lequel les miroirs individuels (26₁ à 26₇) sont à réflexion totale.

11. Système optique selon l'une quelconque des revendications 1 à 9, dans lequel les miroirs individuels (26₁ à 26₇) sont à réflexion partielle et semi-transparents.

12. Système optique selon l'une quelconque des revendications 1 à 11, dans lequel l'agencement de découplage (24) présente plusieurs rangées de miroirs individuels (26₁ à 26₇, 27₁ à 27₇), dans lequel chaque rangée s'étend dans la direction de propagation de la lumière, et dans chaque rangée, des miroirs individuels (26₁, 26₃, 26₅, 26₇, 27₁, 27₃, 27₅, 27₇) du premier groupe et des miroirs individuels (26₂, 26₄, 26₆ ; 27₂, 27₄, 27₆) dudit au moins un deuxième groupe sont disposés en alternance.

13. Système optique selon l'une quelconque des revendications 1 à 12, dans lequel le guide d'ondes optiques (18) est un verre de lunettes.

14. Système optique selon la revendication 13, dans lequel le verre de lunettes est courbe.

15. Lunettes connectées, comprenant un système optique (10) selon l'une quelconque des revendications 1 à 14.
